# EUROPÄISCHE PATENTANMELDUNG

(11) **EP 1 832 637 A1**
(43) Veröffentlichungstag der Anmeldung: **12.09.2007**
(21) Anmeldenummer: 07102877.3
(22) Anmeldetag: 22.02.2007
(51) Int. Cl.: C09J 7/00, C09J 7/02, C08K 3/00, C08K 7/00, C08K 11/00, C09J 11/00

(54) **Selbstklebemasse und ihre Verwendung**

(30) Priorität: 08.03.2006 DE 102006011112
(71) Anmelder: tesa AG, 20253 Hamburg (DE)
(72) Erfinder: Massow, Klaus, 22393, Hamburg (DE); Zöllner, Dr. Stephan, 21244, Buchholz /Nordheide (DE); Schönbom, Stephan, 25436, Tornesch (DE); Hansen, Sven, 22765, Hamburg (DE)

(57) **Zusammenfassung**

Unebenheiten im Untergrund ausgleichende, druckempfindliche Selbstklebemasse, die eine Basisklebmasse und einen Zusatzstoff umfasst, wobei der Zusatzstoff ein in der Basisklebmasse unlöslicher und nicht mit der Basisklebmasse vernetzender mikropartikulärer Zusatzstoff mit einer Schüttdichte im Bereich von 0,05 g/cm³ bis 0,25 g/cm³ und mit einem gemittelten Partikeldurchmesser im Mikrometerbereich ist.

## Beschreibung

Die Erfindung betrifft eine druckempfindliche Selbstklebemasse umfassend eine Basisklebmasse und einen mikropartikulären Zusatzstoff, eine Verwendung dieser Selbstklebemasse zum Herstellen von selbstklebenden Flächengebilden, eine Klebeschichtung umfassend eine derartige Selbstklebemasse sowie ein Verfahren zum Beschichten eines Flächengebildes.

Selbstklebende Erzeugnisse sind häufig als Flächengebilde ausgeformt, die zumindest teilweise mit einer Selbstklebemasse in Form einer Klebeschichtung (bzw. eines Klebefilms) beschichtet sind. Solche Flächengebilde können entweder einen Träger aufweisen, etwa Bänder, Etiketten und Folien, oder aber trägerfrei ausgebildet sein (d.h. keinen separaten Träger aufweisen). Eine Verklebung mit dem Untergrund bzw. Substrat wird dabei in der Regel durch Ausüben eines leichten Drucks auf die Oberseite des selbstklebenden Erzeugnisses erzielt. Derartige druckempfindliche Selbstklebemassen, die unmittelbar eine Verbindung mit dem Untergrund eingehen, wenn sie mit diesem in Kontakt gebracht werden, werden auch als "Haftklebemassen" (engl.: "pressure sensitive adhesives") bezeichnet. Die Qualität der hierbei erzielten Verklebung hängt im Wesentlichen von der Größe des ausgeübten Drucks und den Eigenschaften der Selbstklebemasse und des Untergrunds ab.

Insbesondere bei einer rauen Oberfläche bzw. einem unebenen Untergrund tritt bei solchen selbstklebenden Erzeugnissen das Problem auf, dass es zu einer lediglich schwachen, mechanisch nur wenig belastbaren Verklebung kommt. Dies ist die Folge davon, dass auf dem unebenen Untergrund ein nicht unbeträchtlicher Anteil der Klebefläche der Selbstklebemasse gar nicht in Kontakt mit dem Untergrund gebracht wird und daher zur Verklebung nicht beitragen kann, nämlich der Teil der Klebefläche, der sich beispielsweise über kleineren Vertiefungen oder Aussparungen des Untergrunds befindet, da eine Verklebung auf einem derartigen Untergrund ausschließlich über dessen Erhebungen erreicht wird. Dies ist insbesondere dann problematisch, wenn zwei Teile mit Hilfe eines selbstklebenden Erzeugnisses, etwa einem doppelseitig klebenden Selbstklebeband bzw. Klebeband, untereinander verbunden werden sollen, wobei eines oder sogar beide zu verbindenden Teile eine raue Oberfläche aufweisen. In diesem Fall kann die Rauigkeit der Oberfläche nicht mehr durch eine etwaige Flexibilität des Trägers eines selbstklebenden Flächengebildes ausgeglichen werden, was eine besonders schwache Verklebung zur Folge hat.
Eine Möglichkeit, eine Verklebung auch auf unebenen Unterlagen zu gewährleisten, besteht darin, das selbstklebende Flächengebilde derart auszurüsten, dass die Unebenheiten des Untergrundes durch das Flächengebilde ausgeglichen werden. Dies lässt sich etwa durch eine das Volumen des Untergrundes ausgleichende Zwischenschicht erreichen, die sich zwischen dem Träger und der Selbstklebemasse befindet. Eine solche ausgleichende Zwischenschicht muss elastisch oder hochviskos sein und außerdem mit dem Träger einerseits, der Selbstklebemasse andererseits mechanisch fest verbindbar sein. Durch Aufdrücken des selbstklebenden Flächengebildes auf den Untergrund wird die als ausgleichende Zwischenschicht verwendete Masse an den Orten größeren Druckes (Erhebungen des Untergrundes) stärker komprimiert als an den Stellen niedrigeren Druckes (Vertiefungen im Untergrund) oder fließt sogar von den Stellen größeren Druckes zu den Orten niedrigeren Druckes. Auf diese Weise werden etwaige Unebenheiten ausgeglichen, so dass die gesamte Klebefläche mit dem Untergrund in Kontakt gebracht wird und dadurch eine starke Verklebung erzielt werden kann. Erforderlich ist allerdings, dass die ausgleichende Zwischenschicht hinreichend dick ist, um die vorhandenen Unebenheiten des Untergrundes auch tatsächlich ausgleichen zu können.

Zum Aufbringen einer solchen separaten ausgleichenden Zwischenschicht ist gegenüber herkömmlichen selbstklebenden Flächengebilden jedoch mindestens ein zusätzlicher Verfahrensschritt erforderlich, nämlich das Auftragen dieser Zwischenschicht. Zur Vereinfachung des Verfahrens wird daher versucht, die Selbstklebemasse selbst als ausgleichende Schicht auszubilden, quasi als Massepolster. Grundsätzlich sind Selbstklebemassen dank ihres durch die viskosen Anteile vermittelten Fließverhaltens gut geeignet, als ausgleichende Schicht zu dienen.

Als wichtigsten Bestandteil enthält eine solche Selbstklebemasse eine klebende Komponente, die Basisklebmasse, die ihrerseits unterschiedliche Bestandteile umfassen kann, etwa klebende Bestandteile wie Klebharze und struktursteuernde Bestandteile wie Weichmacher, Vernetzer oder Vernetzerhilfsmittel. Derartige Basisklebmassen sind jedoch in der Herstellung relativ teuer und zudem oft nicht ohne weiteres biologisch abbaubar. Aus diesem Grund wird üblicherweise versucht, die absolute Menge an Basisklebmasse auf einem selbstklebenden Flächengebilde möglichst gering zu halten. Also werden der Selbstklebemasse häufig Zusatzstoffe als Füllstoffe beigemengt, die das Gesamtvolumen der Selbstklebemasse aufweiten und so den Masseauftrag an Basisklebmasse in der Selbstklebemasse gering halten sollen.

Grundsätzlich ist bekannt, als Beimengung von Selbstklebemassen Zusatzstoffe wie Färbemittel, Füllmittel oder Expander zu verwenden. Als Zusatzstoffe kommen herkömmlicherweise solche Substanzen zum Einsatz, die bestimmte physikalische Eigenschaften der Selbstklebemasse modifizieren sollen, beispielsweise als Färbemittel Titandioxid oder als Füllmittel mineralische Substanzen wie etwa Talk, Calciumcarbonat, Ton, Siliziumdioxid, Glimmer, Wollastonit, Feldspat, Alumosilikate, Aluminiumoxide oder Schwerspat. Neben derartigen natürlichen mineralischen Substanzen werden als Füllmittel ebenfalls künstliche mineralische Strukturen wie beispielsweise Glasmikrokugeln oder keramische Mikrokugeln oder organische Strukturen verwendet, etwa Holz in Form von Sägespänen.

Solche Zusatzstoffe werden der Selbstklebemasse üblicherweise in einer Beimengung von 0 Gew.-% bis 50 Gew.-% zugesetzt. Werden jedoch einer Selbstklebemasse größere Mengen an derartigen Zusatzstoffen zugesetzt, so weichen die Eigenschaften der resultierenden Selbstklebemasse zum Teil von denen der reinen Basisklebmasse deutlich ab. Insbesondere die Klebefähigkeit der Selbstklebemasse nimmt um so stärker ab, je höher der Anteil an Zusatzstoffen ausfällt. Dies führt insgesamt dazu, dass nur geringe Gewichtsanteile der Basisklebmasse in der Selbstklebemasse ausgetauscht werden können, ohne dass die Eignung als Selbstklebemasse deutlich beeinträchtigt wird. So ist es zwar durchaus möglich, Selbstklebemassen mit einem Gewichtsanteil von mehr als 30 % an Zusatzstoffen herzustellen, jedoch sind diese in der Regel nicht mehr zur Herstellung von selbstklebenden Flächengebilden geeignet. Demzufolge darf bei derartigen Zusatzstoffen der Selbstklebemasse lediglich ein geringer Masseanteil an Zusatzstoffe zugesetzt werden. Ein geringer Massenanteil an Zusatzstoffen führt aber dazu, dass ebenfalls ein nur geringer Anteil des Gesamtvolumens der Selbstklebemasse gegen den Zusatzstoff ausgetauscht wird. Muss bei einer Unebenheiten im Untergrund ausgleichenden Selbstklebemasse also die Schichtdicke der Selbstklebemasse-Schicht deutlich größer sein als bei einem herkömmlichen Selbstklebeband, hat dies zur Folge, dass bei Verwendung eines herkömmlichen Zusatzstoffes pro Flächeneinheit relativ viel der aus ökonomischen und ökologischen Gesichtspunkten nachteiligen Basisklebmasse eingesetzt werden muss.

Aufgabe der Erfindung war es somit, eine druckempfindliche Selbstklebemasse zur Verfügung zu stellen, die zur Herstellung von besonders gut auf unebenen Unterlagen haftenden haftklebrigen Flächengebilden geeignet ist, und die zugleich nur einen geringen Anteil an Basisklebmasse aufweist, ohne dass dadurch die Klebeigenschaften der Selbstklebemasse signifikant beeinträchtigt sind. Ferner war es Aufgabe, die Verwendung einer Unebenheiten im Untergrund ausgleichenden druckempfindlichen Selbstklebemasse zum Herstellen von selbstklebenden Flächengebilden, eine diese Selbstklebemasse umfassende Klebeschichtung, ein eine derartige Klebeschichtung umfassendes selbstklebendes Flächengebilde sowie ein Verfahren zum Herstellen von derartigen Flächengebilden bereit zu stellen.

Die Aufgabe konnte überraschend gelöst werden durch eine Unebenheiten im Untergrund ausgleichende, druckempfindliche Selbstklebemasse umfassend eine Basisklebmasse und einen Zusatzstoff, bei der der Zusatzstoff ein in der Basisklebmasse unlöslicher und nicht mit der Basisklebmasse vernetzender mikropartikulärer Zusatzstoff mit einer Schüttdichte im Bereich von 0,05 g/cm³ bis 0,25 g/cm³ und mit einem gemittelten Partikeldurchmesser im Mikrometerbereich ist.

Als Zusatzstoff wird erfindungsgemäß ein Zusatzstoff mit einer mikropartikulären Struktur gewählt, d. h. ein aus einzelnen Partikeln oder Teilchen aufgebauter Zusatzstoff, wobei die mittleren Abmessungen der Teilchen bzw. gemittelten Durchmesser der Partikel im Mikrometerbereich liegen, d. h. im Bereich von 1 µm bis hin zu etlichen 100 µm, insgesamt jedoch kleiner sind als 1 mm. Ferner ist es notwendig, dass die Schüttdichte bzw. Bulkdichte des Zusatzstoffes im Bereich von 0,05 g/cm³ bis 0,25 g/cm³ liegt, wobei es noch vorteilhafter ist, wenn der mikropartikuläre Zusatzstoff eine Schüttdichte im Bereich von 0,05 g/cm³ bis 0,15 g/cm³ aufweist, insbesondere von 0,08 g/cm³. Die Kombination von Schüttdichte und Teilchengröße bzw. Partikeldurchmesser erlaubt eine Beimengung eines Zusatzstoffes zu einem hohen Masseanteil, eine beträchtliche Volumenaufweitung der Selbstklebemasse und somit auch eine deutliche Verringerung des Basisklebmasseanteils. Daher ist es möglich, eine große Volumenaufweitung der Selbstklebemasse bei nur geringer Änderung des Massegehalts an Basisklebmasse zu erzielen.

Hierbei ist es insbesondere vorteilhaft, wenn die kompakte Dichte des Zusatzstoffes (d.h. die Dichte des Zusatzstoffes im kompakten, nicht-partikulären Zustand) so gewählt wird, dass sie kleiner ist als die Dichte der Basisklebmasse, beispielsweise für Basisklebmassen auf Polyacrylatbasis ein Zusatzstoff mit einer Dichte von weniger als 1 g/cm³. Auf diese Weise ist es möglich, Selbstklebemassenschichtungen mit großen Schichtdicken zu erreichen, die im Wesentlichen dasselbe Flächengewicht wie Schichtungen aus solchen Selbstklebemassen aufweisen, die allein aus Basisklebmasse hergestellt sind.

Erfindungsgemäß ist ferner gewährleistet, dass der Zusatzstoff die Klebeigenschaften der Selbstklebemasse nicht signifikant verändert, indem der Zusatzstoff nicht in der Basisklebmasse bzw. in einem ihrer Bestandteile löslich ist und zudem gleichzeitig mit der Basisklebmasse bzw. mit einem ihrer Bestandteile nicht vernetzt, sondern sich demgegenüber vielmehr inert verhält. Dies bedeutet, dass der Zusatzstoff weder selbst mit der Basisklebmasse bzw. mit einem ihrer Bestandteile eine chemische Bindung eingeht noch deren Vernetzungsfähigkeit und Vernetzungsverhaltens verändert, so dass der Zusatzstoff keine dauerhaften chemischen Wechselwirkungen oder gar Bindungen mit der umgebenden polymeren Basisklebmassenmatrix eingeht. Dies hat den Vorteil, dass es zu keinen unerwünschten bzw. unkontrollierbaren Nachvernetzungsreaktionen der Polymermatrix kommen kann, sei es unter direkter Beteiligung des Zusatzstoffes oder von dessen Bestandteilen, beispielsweise Metall-Ionen oder chemischen Gruppen an dessen Oberfläche, sei es unter dessen katalytischen Einfluss. Infolge dieser Ausbildung ist sichergestellt, dass die Klebeigenschaften der Selbstklebemasse insgesamt von denen der reinen Basisklebmasse nur geringfügig abweichen und insgesamt auch bei höherem Zusatzstoffanteil in der Selbstklebemasse dauerhaft eine hervorragende Klebkraft erzielt wird.

Infolge der Kombination der beiden durch Beimengung des erfindungsgemäßen Zusatzstoffes erzielten Einzeleffekte - die maximale Volumenaufweitung der Selbstklebemasse bei gleichem Masseanteil der Basisklebmasse in Verbindung mit der Minimierung der Beeinträchtigung des Klebeverhaltens der Selbstklebemasse - wird so eine Selbstklebemasse erhalten, die geeignet ist, Unebenheiten im Untergrund gut auszugleichen und gleichzeitig hervorragende Klebeigenschaften aufweist.

Als Zusatzstoffe können jegliche üblichen partikulären Zusatzstoffe zum Einsatz kommen, sofern diese die erfindungswesentlichen Eigenschaften aufweisen. Dies schließt die physikalischen Eigenschaften Schüttdichte und Partikeldurchmesser und auch die chemischen Eigenschaften Unlöslichkeit in einem Bestandteil der Basisklebmasse und Vernetzbarkeit mit einem dieser Bestandteile ein. Aus ökologischen Gesichtspunkten ist es hierbei besonders vorteilhaft, natürlich nachwachsende und biologisch abbaubare Rohstoffe zu verwenden, beispielsweise Holzmehle, Holzstäube, Getreidemehle, Stärken, Sporen (etwa von Lycopodium clavatum) oder dergleichen. Ein weiterer Vorteil bei der Verwendung derartiger Zusatzstoffe besteht darin, dass sie nicht nur außerordentlich kostengünstig in Herstellung und Entsorgung sind, sondern darüber hinaus auch häufig ein großes Maß an innerer Elastizität aufweisen und so einer mechanischen Belastung der Selbstklebemasse zerstörungsfrei zu widerstehen vermögen.

Als Bestandteil umfasst die erfindungsgemäße Selbstklebemasse weiterhin eine Basisklebmasse. Die Basisklebmasse kann ihrerseits die üblichen Bestandteile umfassen, beispielsweise Klebharze, Weichmacher, Vernetzer, Vernetzungshilfsmittel sowie Antioxidantien. Als Basisklebmasse kann jede übliche Klebemasse verwendet werden, beispielsweise eine Lösemittelklebemasse, Dispersionsklebemasse, aushärtende Schmelzklebemasse und/oder nichtaushärtende Schmelzklebemasse. Geeignet sind hierbei alle üblichen Systeme, insbesondere Schmelzklebemassen (sog. "Hot-Melts") und solche auf der Basis von Polyacrylaten, von Elastomeren (thermoplastischen und nicht-thermoplastischen) oder von Polyurethanen (ein- oder mehrkomponentig).

Weiterhin ist es günstig, wenn mindestens 70 % der Partikel des mikropartikulären Zusatzstoffes einen Durchmesser von 200 µm oder weniger aufweisen, insbesondere von 100 µm oder weniger, und wenn zudem mindestens 50 % der Partikel des mikropartikulären Zusatzstoffes einen Durchmesser von 80 µm oder weniger aufweisen. Durch die Wahl einer derartigen Teilchengrößen- bzw. Partikeldurchmesserverteilung wird eine besonders vorteilhafte Raumerfüllung innerhalb der mit dem Zusatzstoff versehenen Selbstklebemasse erreicht, ohne dass hierdurch die mechanische Stabilität oder die rheologischen Eigenschaften im Vergleich zu denen der reinen Basisklebmasse deutlich beeinträchtigt werden. Von Vorteil ist es außerdem, wenn die Selbstklebemasse den mikropartikulären Zusatzstoff zu einem Anteil von 50 Gew.-% oder weniger umfasst, wobei ganz besonders vorteilhaft ein Gewichtsanteil ist, der zwischen 15 Gew.-% und 35 Gew.-% liegt.

Weiterhin stellt die Erfindung eine Klebeschichtung bereit, die obige Unebenheiten im Untergrund ausgleichende druckempfindliche Selbstklebemasse umfasst, wobei die Selbstklebemasse schichtförmig ausgebildet ist. Eine derartige Klebeschichtung ist eine flächenförmig-schichtartig Ausgestaltung einer oder mehrerer Klebemassen, die allein (d.h. trägerfrei, beispielsweise in Form eines Transferklebebandes) oder auf einem Trägermaterial (etwa in Form von Klebefolien, Klebebändern oder -etiketten) gebildet wird. Eine erfindungsgemäße Klebeschichtung umfasst daher entweder eine Schichtung der erfindungsgemäßen Selbstklebemasse allein oder zusammen mit einer oder mehrerer Klebemassen. Hierbei ist es insbesondere vorteilhaft, wenn die Klebeschichtung ferner eine erste äußere Selbstklebemasse umfasst, die schichtförmig an der ersten Seite der schichtförmigen Selbstklebemasse ausgebildet ist und diese einseitig bedeckt. Durch diese erste äußere Selbstklebemasse ist es möglich, zusätzlich zu der Unebenheiten ausgleichenden Funktion der Selbstklebemasse eine weitere Klebemasse mit gezielt steuerbaren Parametern einzusetzen, um so beim Endprodukt bestimmte Eigenschaften zu erhalten, beispielsweise eine Steuerung des Moduls oder der Klebkraft auf bestimmten Materialien des Untergrunds und/oder auf dem Trägermaterial. Die erste äußere Selbstklebemasse wird hierbei auf die erfindungsgemäße Selbstklebemasse mit üblichen Verfahren aufgebracht, beispielsweise aufkaschiert. Ferner ist es günstig, wenn die Klebeschichtung weiterhin eine zweite äußere Selbstklebemasse umfasst, die schichtförmig an der zweiten Seite der schichtförmigen Selbstklebemasse ausgebildet ist und diese einseitig bedeckt. Hierdurch wird ein trägerfreies doppelseitig klebendes Selbstklebeband erhalten, bei dem jede der beiden Klebemassen über gezielt steuerbare Klebeigenschaften verfügt, und das zudem noch Unebenheiten im Untergrund ausgleicht. Derartige Selbstklebebandsysteme werden beispielsweise als Transferband verwendet. Hierfür ist es möglich, die erfindungsgemäße Selbstklebemasse zunächst auf einen temporären Träger aufzutragen, der über Release-Eigenschaften verfügt, beispielsweise ein Silikon-Trennpapier, von dem sie vor einem weiteren Beschichten oder aber nach Beschichten der Selbstklebemasse mit einer äußeren Klebemasse wieder abgelöst wird.

Es ist zudem vorteilhaft, obige Unebenheiten im Untergrund ausgleichende druckempfindliche Selbstklebemasse dafür zu verwenden, um mit dieser Flächengebilde zu beschichten. Auf diese Weise ist es möglich, selbstklebende Flächengebilde zu erhalten, die auf unebenem Untergrund mit hervorragender Klebkraft haften. Besonders vorteilhaft ist es, wenn ein derartiges Selbstklebeband eine schichtförmige Selbstklebemasse mit einer Schichtdicke von 100 µm oder mehr umfasst, insbesondere 200 µm oder mehr. Hierdurch wird ein dicker Selbstklebemassenfilm mit einer besonders starken Ausgleichsfunktion erhalten, der selbst auf einem Untergrund mit außerordentlicher Rauigkeit zu haften vermag.

Als flächenartiger Träger für ein derartiges Flächengebilde können alle üblichen Träger verwendet werden, beispielsweise solche aus Polyvinylchlorid, Polypropylen, Celluloseacetat, Polyester, Papier, Gewebe usw., die flächenartig ausgebildet sind, etwa in Form von Bändern, Etiketten oder Folien.

Ferner bietet die Erfindung ein Verfahren zum Beschichten eines Flächengebildes, insbesondere eines bandförmigen Flächengebildes, das die Schritte eines Herstellens der oben beschriebenen druckempfindlichen Selbstklebemasse durch Vermischen der partikulären Zusatzstoffe mit der Basisklebmasse umfasst, gefolgt von einem Auftragen der so erhaltenen Selbstklebemasse auf einen flächenförmigen Träger und einer anschließenden Nachbehandlung des so erhaltenen beschichteten Flächengebildes umfasst.

Das Vermischen der erfindungsgemäßen Zusatzstoffe mit der Basisklebmasse kann hierbei nach üblichen Mischverfahren geschehen, etwa unter Zuhilfenahme eines Kneters oder dergleichen, wobei es vorteilhaft ist, wenn der Zusatzstoff in die lösemittelfreie Basisklebmasse homogen eingemischt wird. Hierbei ist es besonders günstig, wenn die Abmischung kontinuierlich durchgeführt wird, beispielsweise in einem Extruder wie etwa einem Mehrwellen-, Doppelschnecken- oder Planetwalzenextruder.

Günstig ist es überdies, wenn die Zusatzstoffe ohne Vortrocknung dem Abmischprozess zugeführt werden. Eine Trocknung der Selbstklebemasse kann vorteilhafterweise am Ende des Einmischprozesses nach üblichen Verfahren durchgeführt werden, beispielsweise über eine Vakuumentgasung.

Die daran anschließende Beschichtung wird mit üblichen Beschichtungsverfahren durchgeführt, etwa unter Verwendung herkömmlicher Beschichtungsaggregate wie einem Mehrwalzenauftragswerk bzw. einem Kalander.

Einer Nachbehandlung kann sämtliche üblichen Nachbehandlungsschritte umfassen, etwa ein Reinigen, Beschichten und/oder Nachvernetzen der Basisklebmasse in der Selbstklebemasse. Letzteres dient zur Erhöhung der Kohäsion nach dem Ausformen der Klebeschichtung auf dem flächenförmigen Träger in der gewünschten Schichtstärke und kann nach üblichen chemischen und/oder physikalischen Verfahren durchgeführt werden, beispielsweise katalytisch (etwa durch Zugabe von Lewissäuren wie Zinnchlorid zur Basisklebmasse), thermisch, photochemisch oder mittels energiereicher Strahlung. Eine derartige Nachvernetzung bietet den Vorteil, dass die Selbstklebemasse während des Auftragens im Beschichtungsaggregat noch ausformbar ist und die erwünschte Endviskosität erst hinterher erhält, in der Nachbehandlung.

Zur Verdeutlichung der Erfindung ist im Folgenden die Herstellung eines selbstklebenden bahnförmigen Flächengebildes beispielhaft beschrieben:
Die lösemittelfreie Basisklebmasse enthielt 42,5 Gew.-% Kautschuk (NR Air Dried Sheets), 21,25 Gew.-% Resin 731 D (Klebharz der Fa. Eastman), 18,75 Gew.-% Escorez 1202 (Klebharz der Fa. ExxonMobile Chemical), 7,5 Gew.-% Dercolyte S115 (Terpenharz der Fa. DRT), 5,0 Gew.-% aktives Zinkoxid (als Färbemittel und Vernetzungskatalysator), 3,75 Gew.-% Ondina G 33 (Öl der Fa. Shell) und 1,25 Gew.-% Lowinox AH25 (Stabilisator der Fa. Chemtura Corporation).

Als partikulärer Zusatzstoff wurde vorgetrocknetes gesiebtes Holzmehl (Typ C160 (auf Nadelholzbasis) der Fa. Holzmühle Westerkamp GmbH; Schüttdichte: 0,105 g/cm³; Teilchengrößenverteilung: 100 % der Partikel mit einem Durchmesser von weniger als 100 µm und 53 % der Partikel mit einem Durchmesser von weniger als 80 µm) zu einem Gewichtsanteil von 20 % der Gesamtmasse eingesetzt.

Die Festkomponenten wurden über gravimetrische Dosierer in das Füllteil eines mit drei Walzenzylindern ausgestatteten Planetwalzenextruders (Fa. ENTEX Rust& Mitschke) eingebracht. Das Harz Escorez 1202 wurde bei 160 °C als Schmelze nach dem ersten Drittel der Verfahrenslänge des Planetwalzenextruders eingespritzt, dass Öl Ondina G 33 nach dem zweiten Drittel der Verfahrenslänge.

Der Gesamtdurchsatz des Planetwalzenextruders betrug 42 kg/h bei einer Drehzahl der Zentralspindel von 120 min⁻¹. Die Zentralspindel des Extruders wurde mit Kühlwasser von 12 °C betrieben, die Walzenzylinder waren auf 90 °C temperiert. Im letzten Walzenzylinder des Planetwalzenextruders wurde die Selbstklebemasse über eine Öffnung im Extruder evakuiert und so von Luft und Feuchtigkeit befreit.

Die so hergestellte Selbstklebemasse wurde über einen nachgeschalteten Einschneckenextruder dem ersten Walzenspalt eines Dreiwalzenkalanders (Arbeitbreite: 350 mm) zugeführt. Zwischen der ersten und der zweiten Walze des Kalanders erfolgte die Vorausformung der Klebeschichtung. Die gewünschte Schichtdicke der Klebeschichtung von 100 µm wurde unter Kontrolle der Spaltbreite zwischen der zweiten und dritten Walze des Kalanders erhalten. Die Temperaturen der Walzen betrug bei einer Bahngeschwindigkeit von 25 m/min 95 °C, wobei zwischen der zweiten und dritten Kalanderwalze ein Verhältnis von 1:4 in der Differenzgeschwindigkeit beider Walzen eingestellt wurde.

Die Selbstklebemasse wurde auf ein beidseitig silikonisiertes Trennpapier direkt beschichtet. In einer Nachbehandlung wurde mittels einer Kaschierstation die Klebeschichtung dann auf ein handelsübliches Zellwollrohgewebe (Fadendichte: 19/17) übertragen.

Das so hergestellte Selbstklebeband wies eine sehr gute Haftung auf unebenem Untergrund auf.

## Patentansprüche

1. Unebenheiten im Untergrund ausgleichende, druckempfindliche Selbstklebemasse umfassend eine Basisklebmasse und einen Zusatzstoff,
**dadurch gekennzeichnet, dass**
der Zusatzstoff ein in der Basisklebmasse unlöslicher und nicht mit der Basisklebmasse vernetzender mikropartikulärer Zusatzstoff mit einer Schüttdichte im Bereich von 0,05 g/cm³ bis 0,25 g/cm³ und mit einem gemittelten Partikeldurchmesser im Mikrometerbereich ist.

2. Selbstklebemasse nach Anspruch 1, wobei der mikropartikuläre Zusatzstoff eine Schüttdichte im Bereich von 0,05 g/cm³ bis 0,15 g/cm³ aufweist, insbesondere von 0,08 g/cm³.

3. Selbstklebemasse nach einem der vorhergehenden Ansprüche, wobei mindestens 70 % der Partikel des mikropartikulären Zusatzstoffes einen Durchmesser von 200 µm oder weniger aufweisen und zudem mindestens 50 % der Partikel des mikropartikulären Zusatzstoffes einen Durchmesser von 80 µm oder weniger.

4. Selbstklebemasse nach Anspruch 3, wobei mindestens 70 % der Partikel des mikropartikulären Zusatzstoffes einen Durchmesser von 100 µm oder weniger aufweisen und zudem mindestens 50 % der Partikel des mikropartikulären Zusatzstoffes einen Durchmesser von 80 µm oder weniger.

5. Selbstklebemasse nach einem der vorhergehenden Ansprüche, wobei die Selbstklebemasse den mikropartikulären Zusatzstoff zu einem Anteil von 50 Gew.-% oder weniger umfasst, insbesondere zu einem Anteil von mehr als 15 Gew.-% und weniger als 35 Gew.-%.

6. Verwendung einer Unebenheiten im Untergrund ausgleichenden druckempfindlichen Selbstklebemasse nach einem der Ansprüche 1 bis 5 zur Herstellung von selbstklebenden Flächengebilden.

7. Klebeschichtung umfassend eine Unebenheiten im Untergrund ausgleichende druckempfindliche Selbstklebemasse nach einem der Ansprüche 1 bis 5, wobei die Selbstklebemasse schichtförmig ausgebildet ist.

8. Klebeschichtung nach Anspruch 7, die weiterhin eine erste äußere Selbstklebemasse umfasst, die schichtförmig an der ersten Seite der schichtförmigen Selbstklebemasse ausgebildet ist und diese einseitig bedeckt.

9. Klebeschichtung nach Anspruch 7 oder 8, die weiterhin eine zweite äußere Selbstklebemasse umfasst, die schichtförmig an der zweiten Seite der schichtförmigen Selbstklebemasse ausgebildet ist und diese einseitig bedeckt.

10. Selbstklebendes Flächengebilde, insbesondere Selbstklebeband, umfassend einen Träger und eine Klebeschichtung nach einem der Ansprüche 7 bis 9.

11. Flächengebilde nach Anspruch 10, wobei die Schichtdicke der schichtförmigen Selbstklebemasse 100 µm oder mehr beträgt, insbesondere 200 µm oder mehr.

12. Verfahren zum Beschichten eines Flächengebildes, insbesondere bandförmigen Flächengebildes, umfassend die Schritte eines Herstellens der druckempfindlichen Selbstklebemasse gemäß einem der Ansprüche 1 bis 5 durch Vermischen der partikulären Zusatzstoffe mit der Basisklebmasse, gefolgt von einem Auftragen der so erhaltenen Selbstklebemasse auf einen flächenförmigen Träger und einer Nachbehandlung des so erhaltenen beschichteten Flächengebildes.
